# EUROPEAN PATENT APPLICATION

(11) **EP 3 364 687 A1**
(43) Date of publication of application: **22.08.2018**
(21) Application number: 17156278.8
(22) Date of filing: 15.02.2017
(51) Int. Cl.: H04W 40/24, H04L 29/14, H04L 29/12

(54) **TRANSMITTING ADRESS PARAMETERS OF AN INFORMER DEVICE**

(71) Applicant: ABB Schweiz AG, 5400 Baden (CH)
(72) Inventor: PANG, Zhibo, 722 42 Västerås (SE); SCHMITT, Johannes, 68526 Ladenburg (DE); LAN, Dapeng, 114 17 Stockholm (SE); LIU, Yu, Zhenjiang (CN)
(74) Representative: Jin, Xiao-Hong

(57) **Abstract**

It is provided a method for transmitting address parameters of an informer device of a communication network. The method is performed in the informer device and comprises the steps of: detecting that the informer device has lost its connection to the communication network; rejoining the communication network, resulting in an updated set of network address records for the informer device; determining a set of recipient devices, the set of recipient devices being a strict subset of all devices of the communication network; and transmitting the updated set of network address records only to the set of recipient devices.

## Description

### TECHNICAL FIELD

The invention relates to a method, an informer device, a computer program and a computer program product for transmitting address parameters.

### BACKGROUND

Long term reliability, also called availability, is one of the main challenges in the adoption of building automation networks, both when the communication is based on wireless and when based on wired technology like PLC (power line communication). Due to non-ideal signal propagation and various types of interference in the building network, the building automation network often suffers from frequent packet loss. One of the consequences of the packet loss is a device dropping its connection, i.e. a situation when the device is disconnected from the network. Any such loss in communication ability decreases the availability of building automation networks.

Existing networking technologies and standards such as WiFi, ZigBee, Bluetooth, Thread, HomePlug GreenPHY/AV/AV2, KNX, etc. allow the dropped device to rejoin the network. However, known methods, which allow the dropped device to rejoin the network, are unable to ensure that the rejoined device is reachable for other devices.

### SUMMARY

It is an object to allow a device, which rejoins a communication network, to allow continued communication with other devices in an efficient manner.

According to a first aspect, it is provided a method for transmitting address parameters of an informer device of a communication network. The method is performed in the informer device and comprises the steps of: detecting that the informer device has lost its connection to the communication network; rejoining the communication network, resulting in an updated set of network address records for the informer device; determining a set of recipient devices, the set of recipient devices being a strict subset of all devices of the communication network; and transmitting the updated set of network address records only to the set of recipient devices.

In the step of determining a set of recipient devices, the set of recipient devices may comprise any device paired with the informer device.

In the step of determining a set of recipient devices, the set of recipient devices may comprise any devices with routing capability being provided on a most direct path between the informer device and the paired device.

In the step of determining a set of recipient devices, the set of recipient devices may comprise a network manager of the communication network.

In the step of determining a set of recipient devices, the set of recipient devices may comprise any devices with routing capability being provided on a most direct path between the informer device and the network manager.

In the step of determining a set of recipient devices, the set of recipient devices may comprise a secondary routing set comprising any devices with routing capability being provided on a path between the informer device and a paired device or the network manager.

The step of transmitting the updated set of network address records may comprise transmitting the updated set of network address records to the recipient devices of the secondary routing set after transmitting the updated set of network address records to other recipient devices.

The set of network address records may comprise at least one of a mesh local address, a routing locator, a mesh local prefix, router identifier, child identifier, mesh local endpoint identifier, random identifier and unique local address.

The communication network may be a building automation network.

According to a second aspect, it is provided an informer device for transmitting address parameters of the informer device when the informer device is part of a communication network. The informer device comprises: a processor; and a memory storing instructions that, when executed by the processor, cause the informer device to: detect that the informer device has lost its connection to the communication network; rejoin the communication network, resulting in an updated set of network address records for the informer device; determine a set of recipient devices, the set of recipient devices being a strict subset of all devices of the communication network; and transmit the updated set of network address records only to the set of recipient devices.

According to a third aspect, it is provided a computer program for transmitting address parameters of an informer device of a communication network. The computer program comprises computer program code which, when run on an informer device, causes the informer device to: detect that the informer device has lost its connection to the communication network; rejoin the communication network, resulting in an updated set of network address records for the informer device; determine a set of recipient devices, the set of recipient devices being a strict subset of all devices of the communication network; and transmit the updated set of network address records only to the set of recipient devices.

According to a fourth aspect, it is provided a computer program product comprising a computer program according to the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic drawing illustrating an environment of a communication network in which embodiments presented herein can be applied;
Fig 2 is a schematic drawing illustrating the environment of Fig 1 where recipient devices are highlighted in accordance with one embodiment;
Fig 3 is a flow chart illustrating embodiments of methods for transmitting address parameters of an informer device of a communication network;
Fig 4 is a schematic diagram illustrating components of the informer device of Figs 1 and 2 according to one embodiment; and
Fig 5 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

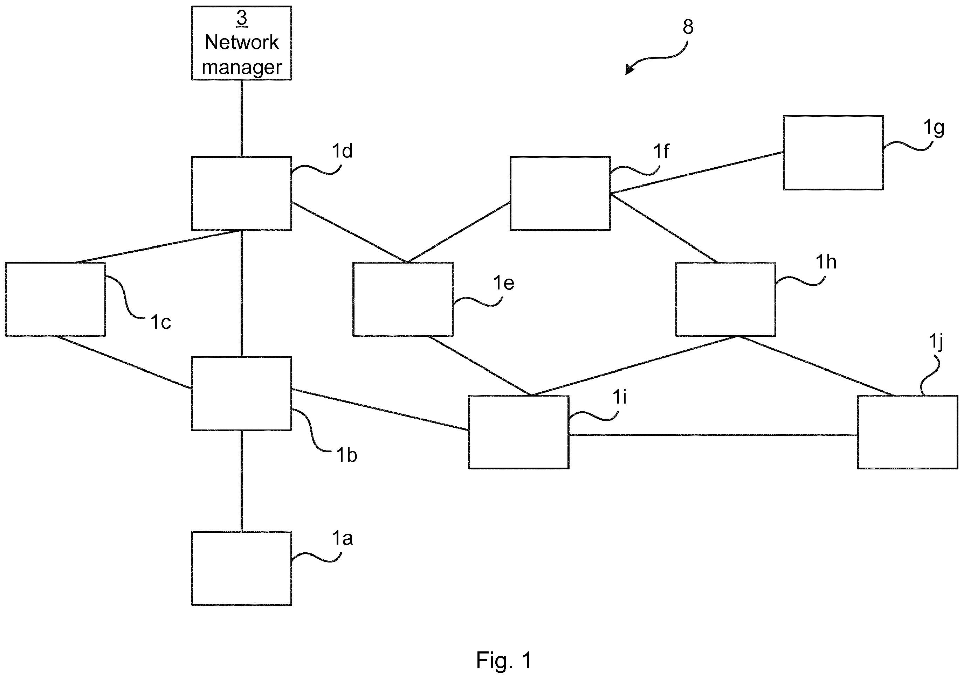

Fig 1 is a schematic drawing illustrating an environment of a communication network 8 in which embodiments presented herein can be applied. The communication network 8 is here a building automation network. The communication network 8 can comply with any suitable current or future communication standard, e.g. WiFi, ZigBee, Bluetooth, Thread, HomePlug (GreenPHY/AV/AV2), KNX, etc. The communication network can be of any suitable topology, including star topology, tree topology or mesh topology.

A network manager 3 can perform actions for managing the joining and rejoining process. For instance, the network manager can be a border router or a leader of routers of a Thread network, a system access point of a wire based network, a router or access point of a WiFi network, a network manager of a ZigBee network, or a master device of Bluetooth network.

In the example of Fig 1, the communication network 8 is a mesh network containing ten devices 1a-j and the network manager 3. The network manager 3 can be connected to a local area network (LAN) and/or an external network, such as the Internet.

In the communication network illustrated in Fig 1, the devices 1a-j form a mesh network. Each one of the devices 1a-j can be an end point device, for receiving and/or transmitting communication. Being a mesh network, each one of the devices 1a-j can also function as a router, i.e. forwarding communication to other devices and/or the network manager as needed.

For instance, if the first device 1a (being a light switch) is paired with the tenth device 1j (being a light connector), the communication between the first device 1a and the tenth device can pass through the second device 1b and the ninth device 1i. Alternatively, the communication can pass through the second device 1b, the fourth device 1d, the fifth device 1e, the sixth device 1f and the eighth device 1h.

As stated above, a device can on occasion lose its connection with the communication network 8, at which point the device rejoins the network. Every time the device rejoins the network, the network addresses or identities of one or more communication layers are reassigned, and may thus differ compared to before the connection was lost.

For example, the network manager 3 can create an updated network address record of the hardware ID, MAC (media access control) layer ID, network layer ID, transport layer ID, application layer ID, etc. This set of network address records can also be denoted Address Mapping Record (AMR). According to embodiments herein, once the rejoin is finished, the set of network address records is transmitted only to a set of recipient devices containing the devices which are involved in the communication with this rejoined device. This can e.g. include at least the network manager, the paired devices, and the intermediate routing devices between the paired devices.

Consider the situation if the set of network address records were to be flooded to whole network (i.e. all devices) without selection, such a situation would cause an excessive amount of traffic and network congestion, given the fact that dropping and rejoining can happen with significant frequency and the number of devices in a building automation network can be large.

On the other hand, when the set of network address records is updated to only a few selected devices in the network, it is of great importance that no devices which would need the set of network address records are omitted from this set of devices. Otherwise, the rejoined device cannot be reached by or through such an omitted device since the packets could be forwarded to wrong path derived by the old network address information.

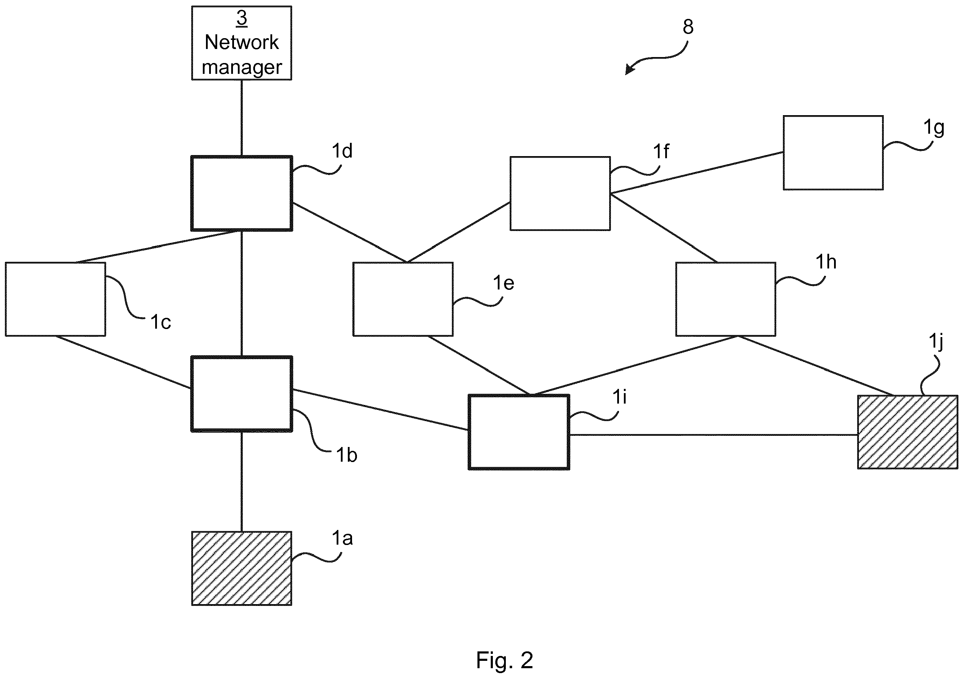

Fig 2 is a schematic drawing illustrating the environment of Fig 1 where recipient devices are highlighted in accordance with one embodiment. In this example, the first device 1a acts as an informer device. It is to be noted that each one of the devices 1a-j and even the network manager 3 can also act as an informer device when connection is lost and rejoining is necessary.

Since the communication network 8 is here embodied as a mesh network, there are intermediate devices between the informer device (the first device) 1a and the network manager 3, in this case the second device 1b and the fourth device id. In this example, the first device 1a is paired with the tenth device 1j (e.g. for a light/switch functionality). Hence, there are intermediate devices between the informer device 1a and the tenth device 1j (to which the informer device 1a is paired), in this case the second device 1b and the ninth device 1i. Hence, when determining a set of recipient devices for receiving the updated set of network address records, the set contains the network node 3, the tenth device 1j, as well as the intermediate devices 1b, 1d, 1i. The intermediate devices 1b, 1d, 1i are highlighted with bold borders in Fig 2.

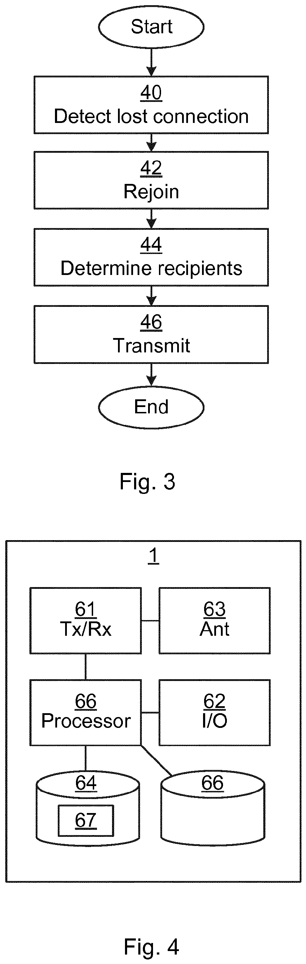

Fig 3 is a flow chart illustrating embodiments of methods for transmitting address parameters of an informer device of a communication network. The method is performed by the informer device.

In a *detect lost connection* step 40, the informer device detects that the it has lost its connection to the communication network, as known in the art per se.

In a *rejoin* step 42, the informer device rejoins the communication network, resulting in an updated set of network address records for the informer device. The set of network address records can comprise at least one of a mesh local address, a routing locator, a mesh local prefix, router identifier, child identifier, mesh local endpoint identifier, random identifier and unique local address.

In a *determine recipients* step 44, a set of recipient devices are determined. The set of recipient devices is a strict subset of all devices of the communication network. In one embodiment, the set of recipient devices comprises any device paired with the informer device (see 1j in Fig 2). In one embodiment, the set of recipient devices comprises any devices with routing capability being provided on a most direct path between the informer device and the paired device (see 1b and 1i of Fig 2).

In one embodiment, the set of recipient devices comprises a network manager of the communication network (see 3 of Fig 2). In one embodiment, the set of recipient devices comprises any devices with routing capability being provided on a most direct path between the informer device and the network manager (see 1b and 1d of Fig 2).

In one embodiment, the set of recipient devices comprises a secondary routing set comprising any devices with routing capability being provided on a path between the informer device and a paired device or the network manager.

In a *transmit* step 46, the updated set of network address records is transmitted only to the set of recipient devices. In one embodiment, the updated set of network address records are transmitted to the recipient devices of the secondary routing set after transmitting the updated set of network address records to other recipient devices, optionally after a delay.

By transmitting the updated set of network address records only to the set of recipient devices, the amount of traffic generated due to the network address update after rejoining is greatly reduced. This is of great importance in a building automation network where the number of devices can be large and where the network quality is often non-ideal.

Fig 4 is a schematic diagram illustrating components of the informer device of Figs 1 and 2 according to one embodiment. The informer device can be any of the devices of the communication network of Figs 1 and 2. A processor 60 is provided using any combination of one or more of a suitable central processing unit (CPU), multiprocessor, microcontroller, digital signal processor (DSP), application specific integrated circuit etc., capable of executing software instructions 67 stored in a memory 64, which can thus be a computer program product. The processor 60 can be configured to execute the method described with reference to Fig 3 above.

The memory 64 can be any combination of read and write memory (RAM) and read only memory (ROM). The memory 64 also comprises persistent storage, which, for example, can be any single one or combination of magnetic memory, optical memory, solid state memory or even remotely mounted memory.

A data memory 66 is also provided for reading and/or storing data during execution of software instructions in the processor 60. The data memory 66 can be any combination of read and write memory (RAM) and read only memory (ROM).

The informer device 1 further comprises an I/O interface 62 for communicating with other external entities. Optionally, the I/O interface 62 also includes a user interface.

Optionally, a transceiver 61 comprises suitable analogue and digital components to allow signal transmission and signal reception with a wireless device using one or more antennas 63.

Other components of the informer device 1 are omitted in order not to obscure the concepts presented herein.

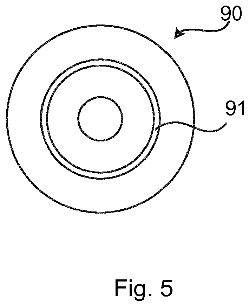

Fig 5 shows one example of a computer program product comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 64 of Fig 4. While the computer program 91 is here schematically shown as a track on the depicted optical disk, the computer program can be stored in any way which is suitable for the computer program product, such as a removable solid state memory, e.g. a Universal Serial Bus (USB) drive.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for transmitting address parameters of an informer device (1, 1a) of a communication network (8), the method being performed in the informer device (1, 1a) and comprising the steps of:
detecting (40) that the informer device (1, 1a) has lost its connection to the communication network (8);
rejoining (42) the communication network (8), resulting in an updated set of network address records for the informer device (1, 1a);
determining (44) a set of recipient devices, the set of recipient devices being a strict subset of all devices of the communication network (8); and
transmitting (46) the updated set of network address records only to the set of recipient devices.

2. The method according to claim 1, wherein in the step of determining (44) a set of recipient devices, the set of recipient devices comprises any device paired with the informer device (1, 1a).

3. The method according to claim 2, wherein in the step of determining (44) a set of recipient devices, the set of recipient devices comprises any devices with routing capability being provided on a most direct path between the informer device (1, 1a) and the paired device.

4. The method according to any one of the preceding claims, wherein in the step of determining (44) a set of recipient devices, the set of recipient devices comprises a network manager (3) of the communication network (8).

5. The method according to claim 4, wherein in the step of determining (44) a set of recipient devices, the set of recipient devices comprises any devices with routing capability being provided on a most direct path between the informer device (1, 1a) and the network manager (3).

6. The method according to any one of the preceding claims, wherein in the step of determining (44) a set of recipient devices, the set of recipient devices comprises a secondary routing set comprising any devices with routing capability being provided on a path between the informer device (1, 1a) and a paired device or the network manager.

7. The method according to claim 6, wherein the step of transmitting (46) the updated set of network address records comprises transmitting the updated set of network address records to the recipient devices of the secondary routing set after transmitting the updated set of network address records to other recipient devices.

8. The method according to any one of the preceding claims, wherein the set of network address records comprises at least one of a mesh local address, a routing locator, a mesh local prefix, router identifier, child identifier, mesh local endpoint identifier, random identifier and unique local address.

9. The method according to any one of the preceding claims, wherein the communication network (8) is a building automation network.

10. An informer device (1, 1a) for transmitting address parameters of the informer device (1, 1a) when the informer device is part of a communication network (8), the informer device (1, 1a) comprising:
a processor (60); and
a memory (64) storing instructions (67) that, when executed by the processor, cause the informer device (1, 1a) to:
detect that the informer device (1, 1a) has lost its connection to the communication network (8);
rejoin the communication network (8), resulting in an updated set of network address records for the informer device (1, 1a);
determine a set of recipient devices, the set of recipient devices being a strict subset of all devices of the communication network (8); and
transmit the updated set of network address records only to the set of recipient devices.

11. A computer program (67, 91) for transmitting address parameters of an informer device (1, 1a) of a communication network (8), the computer program comprising computer program code which, when run on an informer device (1, 1a), causes the informer device (1, 1a) to:
detect that the informer device (1, 1a) has lost its connection to the communication network (8);
rejoin the communication network (8), resulting in an updated set of network address records for the informer device (1, 1a);
determine a set of recipient devices, the set of recipient devices being a strict subset of all devices of the communication network (8); and
transmit the updated set of network address records only to the set of recipient devices.

12. A computer program product (64, 90) comprising a computer program according to claim 11 and a computer readable means on which the computer program is stored.
